# EUROPÄISCHE PATENTSCHRIFT

(11) **EP 2 298 036 B1**
(45) Veröffentlichungstag und Bekanntmachung des Hinweises auf die Patenterteilung: **02.05.2012**
(21) Anmeldenummer: 08786161.3
(22) Anmeldetag: 16.07.2008
(51) Int. Cl.: H05B 39/04

(54) **SCHALTUNGSANORDNUNG UND VERFAHREN ZUM BETREIBEN MINDESTENS EINER BELEUCHTUNGSEINRICHTUNG**
CIRCUIT ARRANGEMENT AND METHOD FOR OPERATING AT LEAST ONE LIGHTING DEVICE
CIRCUIT ET PROCÉDÉ DE FONCTIONNEMENT D'AU MOINS UN DISPOSITIF D'ÉCLAIRAGE

(43) Veröffentlichungstag der Anmeldung: 23.03.2011
(73) Patentinhaber: OSRAM AG, 81543 München (DE)
(72) Erfinder: HUBER, Andreas, 83301 Traunreut (DE); HÄUSSER, Helmut, 83301 Traunreut (DE)
(86) Internationale Anmeldenummer: PCT/EP2008/059262
(87) Internationale Veröffentlichungsnummer: WO 2010/006644

(56) Entgegenhaltungen:
- US-A- 5 740 021
- US-A- 6 144 568
- US-A1- 2002 071 299
- US-A1- 2005 275 353

## Beschreibung

### Technisches Gebiet

Die vorliegende Erfindung betrifft eine Schaltungsanordnung zum Betreiben mindestens einer Beleuchtungseinrichtung mit einem Eingang, der einen ersten und einen zweiten Eingangsanschluss aufweist, zum Anschließen einer Versorgungsspannung, einem Ausgang, der einen ersten und einen zweiten Ausgangsanschluss aufweist, zum Anschließen der mindestens einen Beleuchtungseinrichtung, einem Gleichrichter, der eingangsseitig mit dem ersten und dem zweiten Eingangsanschluss gekoppelt ist, wobei der Gleichrichter einen Ausgang mit einem ersten und einem zweiten Ausgangsanschluss aufweist, einer Brückenschaltung mit einem ersten und einem zweiten Brückenmittelpunkt, wobei die Brückenschaltung mindestens einen ersten und einen zweiten elektronischen Schalter umfasst, wobei jeder elektronische Schalter eine Steuerelektrode, eine Bezugselektrode und eine Arbeitselektrode aufweist, wobei die Bezugselektrode des ersten elektronischen Schalters unter Ausbildung des ersten Brückenmittelpunkts mit der Arbeitselektrode des zweiten elektronischen Schalters gekoppelt ist, einem ersten Transformator mit einer ersten und einer zweiten Wicklung, wobei die erste Wicklung zwischen den ersten und den zweiten Brückenmittelpunkt gekoppelt ist, wobei ein erster Anschluss der zweiten Wicklung mit dem ersten Ausgangsanschluss und ein zweiter Anschluss der zweiten Wicklung mit dem zweiten Ausgangsanschluss der Schaltungsanordnung gekoppelt ist, einem zweiten Transformator mit einer ersten, einer zweiten und einer dritten Wicklung, wobei die erste Wicklung seriell zur ersten Wicklung des ersten Transformators gekoppelt ist, wobei die zweite Wicklung zwischen die Steuerelektrode und die Bezugselektrode des ersten elektronischen Schalters und die dritte Wicklung zwischen die Steuerelektrode und die Bezugselektrode des zweiten elektronischen Schalters gekoppelt ist, einem ersten Kondensator, dessen erster Anschluss mit dem ersten Ausgangsanschluss des Gleichrichters und des zweiter Anschluss mit dem zweiten Ausganganschluss des Gleichrichters gekoppelt ist, einer Zündvorrichtung, deren erster Anschluss mit dem ersten Anschluss des ersten Kondensators und deren zweiter Anschluss mit der Steuerelektrode des zweiten elektronischen Schalters gekoppelt ist, und einem dritten elektronischen Schalter, der eine Steuerelektrode, eine Bezugselektrode und eine Arbeitselektrode aufweist, wobei die Arbeitselektrode des dritten elektronischen Schalters mit dem ersten Ausgangsanschluss des Gleichrichters gekoppelt ist. Sie betrifft überdies ein entsprechendes Verfahren zum Betreiben mindestens einer Beleuchtungseinrichtung.

### Stand der Technik

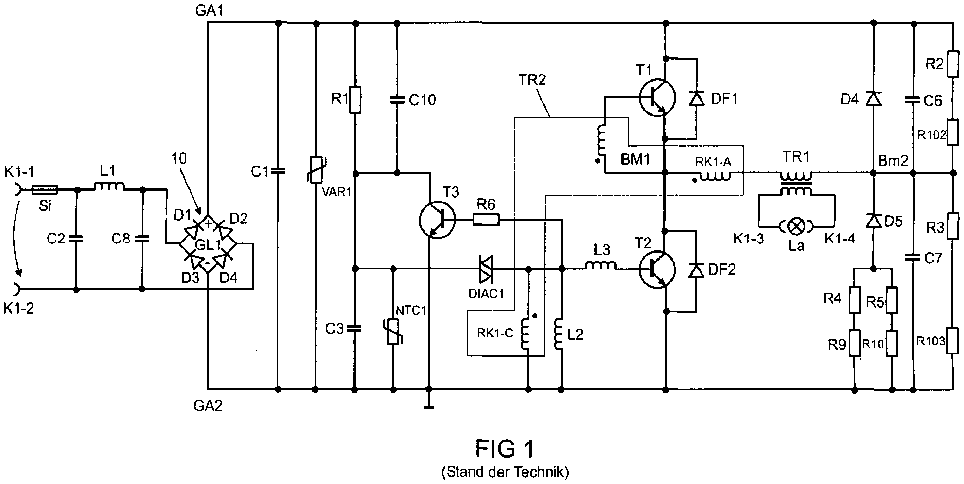

Eine gattungsgemäße, aus dem Stand der Technik bekannte Schaltungsanordnung ist in Fig. 1 dargestellt. Diese umfasst einen ersten K1-1 und einen zweiten Eingangsanschluss K1-2 zum Anschließen einer Versorgungsspannung UN, die insbesondere eine Netzspannung darstellen kann. Zwischen dem Eingangsanschluss K1-1 und einem Gleichrichter 10, der vier Dioden D1 bis D4 umfasst, ist eine Sicherung Si sowie ein Netzwerk, das die Induktivität L1 sowie die Kondensatoren C2 und C8 umfasst und der Funkentstörung dient, angeordnet. Der Gleichrichter 10 weist einen ersten Ausgangsanschluss GA1 und einen zweiten Ausgangsanschluss GA2 auf. Zwischen den Ausgangsanschlüssen GA1, GA2 des Gleichrichters 10 ist ein Kondensator C1 sowie ein Varistor VAR1 geschaltet. Der Varistor dient dazu, Surgepulse durch Kurzschließen zu begrenzen. Darauf folgt ein Kondensator C3, der in Serie zu einem Netzwerk zur Begrenzung seines Ladestroms, das den ohmschen Widerstand R1 und den Kondensator C10 umfasst, zwischen die Ausgangsanschlüsse GA1, GA2 des Gleichrichters 10 geschaltet ist.

Zum Kurzschließen und damit Entladen des Kondensators C3 ist ein Transistor T3 vorgesehen, dessen Arbeitselektrode mit einem ersten Anschluss des Kondensators C3 und dessen Bezugselektrode mit einem zweiten Anschluss des Kondensators C3 gekoppelt ist. Parallel zum Kondensator C3 ist ein NTC-Widerstand NTC1 geschaltet.

Zwischen die Ausgangsanschlüsse GA1, GA2 des Gleichrichters 10 ist weiterhin eine Halbbrückenschaltung gekoppelt. Diese umfasst einen oben liegenden Transistor T1 sowie einen unter liegenden Transistor T2. Vorliegend sind die Transistoren T1, T2 als Bipolartransistoren ausgeführt, wobei ihnen jeweils eine Freilaufdiode D_{F1}, D_{F2} parallel geschaltet ist. Zwischen den Transistoren T1 und T2 ist ein erster Mittelpunkt BM1 der Halbbrückenanordnung geschaffen. Zwischen zwei Koppelkondensatoren C6, C7 befindet sich ein zweiter Mittelpunkt BM2 der Halbbrückenanordnung. Parallel zum Kondensator C6 ist eine Diode D41 und parallel zum Kondensator C7 die Serienschaltung einer Diode D5 sowie ohmsche Widerstände R4, R5, R9, R10 in der gezeigten Darstellung geschaltet.

Vorliegend ist der NTC-Widerstand NTC1 örtlich zwischen den Widerständen R4, R5, R9, R10 angeordnet. Daraus ergibt sich folgender Effekt: Im Falle eines Kurzschlusses fließt durch die Klemmdiode D5 ein großer Strom. Dadurch werden die ohmschen Widerstände R4, R5, R9, R10 wärmer. Der dazwischen montierte NTC-Widerstand NTC1 erwärmt sich dadurch über die Platine. Der Widerstand des erwärmten NTC-Widerstand NTC1 nimmt ab und führt dadurch zu einer gewissen Entladung des Kondensators C3. Daraus resultiert ein so genanntes Phasenanschnittdimmen, wodurch das Gerät durch Zurücknahme der Leistung geschützt wird. Ebenfalls ergibt sich daraus ein Temperaturschutz für den Fall einer Erhöhung der Umgebungstemperatur.

Die Dioden D41, D5 verhindern, dass die Spannung an den Kondensatoren C6, C7 bei einem Kurzschluss oder bei Überlast zu hoch wird. Parallel zum Kondensator C6 ist weiterhin die Serienschaltung zweier ohmscher Widerstände R2, R102 und parallel zum Kondensator C7 die Serienschaltung zweier ohmscher Widerstände R3, R103 geschaltet. Die ohmschen Widerstände R2, R102, R3, R103 dienen als Symmetrierwiderstände zur Fixierung des Potentials vor dem Start. Die Schaltungsanordnung umfasst weiterhin einen ersten Transformator TR1, dessen erste Wicklung zwischen den ersten BM1 und den zweiten Halbbrückenmittelpunkt BM2 gekoppelt ist. Die zwei Anschlüsse der zugehörigen zweiten Wicklung bilden die Ausgangsanschlüsse K1-3, K1-4 der Schaltungsanordnung, zwischen denen eine Lampe La angeschlossen ist.

Die Schaltungsanordnung umfasst weiterhin einen zweiten Transformator TR2, der eine erste Wicklung RK1-A sowie eine zweite RK1-B und eine dritte Wicklung RK1-C umfasst. Die erste Wicklung RK1-A ist seriell zur ersten Wicklung des ersten Transformators TR1 zwischen den ersten BM1 und den zweiten Halbbrückenmittelpunkt BM2 gekoppelt. Die zweite Wicklung RK1-B ist zwischen die Steuerelektrode und die Bezugselektrode des Transistor T1 gekoppelt, während die dritte Wicklung RK1-C zwischen die Steuerelektrode und die Bezugselektrode des Transistors T2 gekoppelt ist.

Die Steuerelektrode des Transistors T3 ist mit der Steuerelektrode des Transistors T2 gekoppelt. Die beiden Bezugselektroden der Transistoren T3, T2 liegen ebenfalls auf demselben Potential. Eine seriell zwischen der dritten Wicklung RK1-C und die Steuerelektrode des Transistors T2 gekoppelte Ferritperle L3 dient einem weichen Einschalten der Transistoren. Eine zur dritten Wicklung RK1-C parallel geschaltete Induktivität L2 dient zur Frequenzeingrenzung. Zwischen dem ersten Anschluss des Kondensators C3 und der Steuerelektrode des Transistors T2 ist eine Zündvorrichtung, vorliegend ein DIAC1, gekoppelt. Schließlich ist ein ohmscher Widerstand R6 vorgesehen, der zwischen die dritte Wicklung RK1-C und die Steuerelektrode des Transistors T3 gekoppelt ist, der das Leitendwerden des Transistors T3 gegenüber dem Leitendwerden des Transistors T2 verzögert. Da ein Leitendwerden des Transistors T3 dazu führt, dass auf dem Kondensator C3 gespeicherte Ladung zum Bezugspotential abfließt und damit nicht mehr zur Zündung des DIAC1 zur Verfügung steht, wird der ohmsche Widerstand R6 verwendet. Im Gegenzug verhindert jedoch der ohmsche Widerstand R6 ein schnelles Kurzschließen und damit ein schnelles Entladen des Kondensators C3 im Falle eines Surgepulses. Funktionsweise: Zum Starten der Schaltungsanordnung wird der Kondensator C3 durch die zwischen den Ausgängen GA1, GA2 des Gleichrichters 10 bereitgestellte Spannung aufgeladen. Erreicht die Spannung über dem Kondensator C3 die Durchbruchspannung des DIAC1, wird ein Potential an die Basis des Transistors T2 angelegt, wodurch die Spannung U_{BE} des Transistors T2 über 0,7 V anwächst und damit den Transistor T2 leitend schaltet. Die Schaltungsanordnung realisiert einen so genannten Selbstschwinger, d. h. dadurch, dass der Transistor T2 leitet, während T1 noch sperrt, fließt ein Strom durch die erste Wicklung RK1-A und die erste Wicklung von TR1. Infolgedessen wird zwischen die Steuer- und die Bezugselektrode des Transistors T1 durch die zweite Wicklung RK1-B eine den Transistor T1 leitend schaltende Spannung angelegt, während der Transistor T2 infolge der über der dritten Wicklung RK1-C zwischen die Steuer- und Bezugselektrode des Transistors T2 angelegte Spannung in den nicht leitenden Zustand übergeht. Dieser Vorgang setzt sich fort, wodurch fortwährend durch den Transformator TR1 eine Rechteckspannung zwischen den Ausgängen K1-3 und K1-4 an die Lampe La bereitgestellt wird. Bei der Lampe La handelt es sich insbesondere um eine 12-Volt-Halogenlampe, die üblicherweise mit einer Rechteckfrequenz von etwa 40 kHz betrieben wird. Die Freischwingeranordnung ist deshalb auf einen Betrieb mit einer Frequenz in dieser Größenordnung ausgelegt. Die galvanische Trennung durch den ersten Transformator TR1 erfolgt aus Sicherheitsgründen.

Dadurch, dass zwischen der Steuer- und der Bezugselektrode des Transistors T3 ebenfalls die über die dritte Wicklung RK1-C eingekoppelte Spannung anliegt, wird im Betrieb der Schaltungsanordnung der Kondensator C3 fortwährend, insbesondere hochfrequent, kurzgeschlossen und dadurch entladen. Als Folge bleibt die über dem Kondensator C3 abfallende Spannung im regulären Betrieb unter der Zündspannung des DIAC1. Der DIAC1 zündet zu Beginn jeder Halbwelle des am Ausgang GA1, GA2 des Gleichrichters 10 bereitgestellten Signals, da der Freischwinger, sobald dieses Signal auf Null zurückgeht, aufhört zu schwingen. Das Signal am Ausgang GA1, GA2 des Gleichrichters 10 ist vorliegend aufgrund der sehr niedrig gewählten Dimensionierung des Kondensators C1 halbwellenförmig.

Probleme ergeben sich jedoch, wenn zwischen den Eingängen K1-1 und K1-2 ein Surgepuls auftritt: Wie die Erfahrung gezeigt hat, weist die in Fig. 1 dargestellte, aus dem Stand der Technik bekannte Schaltungsanordnung eine unerwünscht niedrige Surge-Festigkeit auf.

Die Aufgabe der vorliegenden Erfindung besteht deshalb darin, eine gattungsgemäße Schaltungsanordnung beziehungsweise ein gattungsgemäßes Verfahren derart weiterzubilden, dass eine deutlich verbesserte Surge-Festigkeit bereitgestellt werden kann.

### Darstellung der Erfindung

Diese Aufgabe wird gelöst durch eine Schaltungsanordnung mit den Merkmalen von Patentanspruch 1 sowie durch ein Verfahren mit den Merkmalen von Patentanspruch 9.

Die vorliegende Erfindung beruht auf der Erkenntnis, dass sich die Schaltungsanordnung von Fig. 1 besonders problematisch verhält zu einem Zeitpunkt, bei dem der Transistor T1 leitet und gleichzeitig ein Surgepuls, der bis 1000 V betragen kann, am Eingang K1-, K1-2 auftritt. Wenn nämlich T1 leitet, leitet T2 naturgemäß nicht. Da die Transistoren T2, T3 quasi parallel betrieben werden, leitet zu diesem Zeitpunkt auch der Transistor T3 nicht. Dadurch kann der Surgepuls zu einem derartigen Anwachsen der Spannung über dem Kondensator C3 führen, dass die Durchbruchspannung des DIAC1 erreicht wird und die infolge der dritten Wicklung RK1-C zwischen die Steuer- und Bezugselektrode des Transistors T2 gekoppelte negative Vorspannung überkompensiert wird, d. h. der Transistor T2 infolge des Surgepulses am Eingang K1-1, K1-2 in den leitenden Zustand versetzt wird. Dadurch sind die Transistoren T1, T2 der Brückenschaltung gleichzeitig leitend, wodurch ein Querstrom ermöglicht wird, der in vielen Fällen zum Ausfall von einem der beiden Transistoren T1, T2 und damit zur Zerstörung der Schaltungsanordnung führen kann.

Eine Lösung dieses Problems durch Überdimensionierung der Transistoren T1, T2, so dass diese den Kurzschluss der Brückenschaltung eine bestimmte Zeit schadlos überstehen, ist aufgrund der damit einhergehenden höheren Bauteilekosten unerwünscht.

Auf der Basis dieser Überlegungen liegt der vorliegenden Erfindung weiterhin die Erkenntnis zugrunde, dass die Entladung des Kondensators C3 in einer ungeeigneten Phase erfolgt. Erfindungsgemäß wird deshalb die Entladung des Kondensators C3 um 180° gedreht. Dies wird dadurch erreicht, dass die Bezugselektrode des Transistors T3 mit der Steuerelektrode des Transistors T2 gekoppelt wird und die Steuerelektrode des Transistors T3 mit der Bezugselektrode des Transistors T2. Wenn nun der Transistor T1 leitet, ist der Transistor T3 ebenfalls leitend, so dass der Kondensator C3 und damit ein eventuell vorhandener Surgepuls kurzgeschlossen wird. Damit kann der Transistor T2 nicht mehr leitfähig werden. Die Entstehung eines Querstroms wird zuverlässig verhindert und die Schaltungsanordnung kann durch einen Surgepuls nicht mehr zerstört werden. Besonders hervorzuheben ist, dass diese verbesserte Surge-Festigkeit keinen erhöhten Materialaufwand nach sich zieht. Allein durch die geänderte Anschlussweise der Bezugs- und Steuerelektrode des Transistors T3 wird die gewünschte Verbesserung erzielt.

Daraus resultiert eine höhere Zuverlässigkeit und zu geringeren Ausfällen der Schaltungsanordnung. Weiterhin kommt es bei Surgepulsen nicht mehr zum Flackern der an die Schaltungsanordnung angeschlossenen Lampe. Ein weiterer Vorteil besteht darin, dass der ohmsche Widerstand R6 nunmehr deutlich niederohmiger dimensioniert werden kann als im Stand der Technik, da der Transistor T3 nunmehr am Start der Schaltungsanordnung, d. h. am Zünden des DIAC1, nicht mehr beteiligt ist. Zudem kann der ohmsche Widerstand R6 in einer erfindungsgemäßen Schaltungsanordnung deutlich niederohmiger dimensioniert werden.

Eine bevorzugte Ausführungsform zeichnet sich dadurch aus, dass die Schaltungsanordnung weiterhin eine Parallelschaltung eines ersten ohmschen Widerstands und eines zweiten Kondensators umfasst, die zwischen den ersten Ausgangsanschluss des Gleichrichters und den ersten Anschluss des Kondensators C3 gekoppelt ist. Dadurch wird eine Begrenzung des Ladestroms des ersten Kondensators, d. h. des Startkondensators, erreicht.

Weiterhin bevorzugt ist der erste und/oder der zweite und/oder der dritte elektronische Schalter als Bipolartransistor ausgeführt, wobei dem den ersten elektronischen Schalter realisierenden Bipolartransistor und/oder dem den zweiten elektronischen Schalter realisierenden Bipolartransistor eine Freilaufdiode parallel geschaltet ist. Im Falle der Verwendung eines Feldeffekttransistors kann die im Feldeffekttransistor vorhandene Bodydiode die Funktion der Freilaufdiode übernehmen.

Weiterhin bevorzugt ist zwischen den ersten und den zweiten Ausgangsanschluss des Gleichrichters ein dritter Kondensator und/oder ein Varistor gekoppelt. Durch die Verwendung des Varistors können Surgepulse in gewissem Umfang abgefangen werden. Der dritte Kondensator dient dazu, die Funkentstörung zu verbessern.

Bei einer weiterhin bevorzugten Ausführungsform ist zwischen den Kopplungspunkt der dritten Wicklung des zweiten Transformators und der Steuerelektrode des zweiten elektronischen Schalters einerseits und der Steuerelektrode des dritten elektronischen Schalters andererseits ein zweiter ohmscher Widerstand gekoppelt. Wie bereits erwähnt, dient dieser ohmsche Widerstand einem verzögerten Einschalten des Transistors T3.

Weiterhin bevorzugt ist dem ersten Kondensator ein NTC-Widerstand parallel geschaltet, der einen Temperaturschutz bei Erhöhung der Umgebungstemperatur darstellt. Überdies schützt er vor einem Kurzschluss der Schaltungsanordnung, indem er durch so genanntes Phasenanschnittdimmen die Leistung der Schaltungsanordnung zurücknimmt. Bei einer bevorzugten Ausführungsform umfasst die Schaltungsanordnung weiterhin eine erste und eine zweite Koppeldiode, wobei die erste Koppeldiode zwischen den ersten Ausgangsanschluss des Gleichrichters und den zweiten Brückenmittelpunkt gekoppelt ist, und wobei die zweite Koppeldiode zwischen den zweiten Brückenmittelpunkt und den zweiten Ausgangsanschluss des Gleichrichters gekoppelt ist. Dadurch wird eine Halbbrückenanordnung erreicht, die nur zwei Transistoren benötigt.

Schließlich ist bevorzugt, wenn zwischen die zweite Koppeldiode und den zweiten Ausgangsanschluss des Gleichrichters ein Widerstandsnetzwerk gekoppelt ist, wobei der NTC-Widerstand derart räumlich zum Widerstandsnetzwerk angeordnet ist, dass er thermisch mit dem Widerstandsnetzwerk gekoppelt ist. Wie bereits erwähnt, dient diese Maßnahme dazu, im Fall eines Kurzschlusses die sich durch das Widerstandsnetzwerk ergebende Erwärmung über den NTC1-Widerstand zu einem Phasenanschnittdimmen der Schaltungsanordnung zu verwenden.

Weitere bevorzugte Ausführungsformen ergeben sich aus den Unteransprüchen.

Die mit Bezug auf die erfindungsgemäße Schaltungsanordnung vorgestellten bevorzugten Ausführungsformen und deren Vorteile gelten entsprechend, soweit anwendbar, für das erfindungsgemäße Verfahren.

### Kurze Beschreibung der Zeichnung(en)

Im Nachfolgenden wird nunmehr ein Ausführungsbeispiel einer erfindungsgemäßen Schaltungsanordnung unter Bezugnahme auf die beigefügten Zeichnungen näher beschrieben. Es zeigen:
- Fig. 1: in schematischer Darstellung eine aus dem Stand der Technik bekannte Schaltungsanordnung zum Betreiben mindestens einer Beleuchtungseinrichtung; und
- Fig. 2: in schematischer Darstellung eine erfindungsgemäße Schaltungsanordnung zum Betreiben mindestens einer Beleuchtungseinrichtung.

### Bevorzugte Ausführung der Erfindung

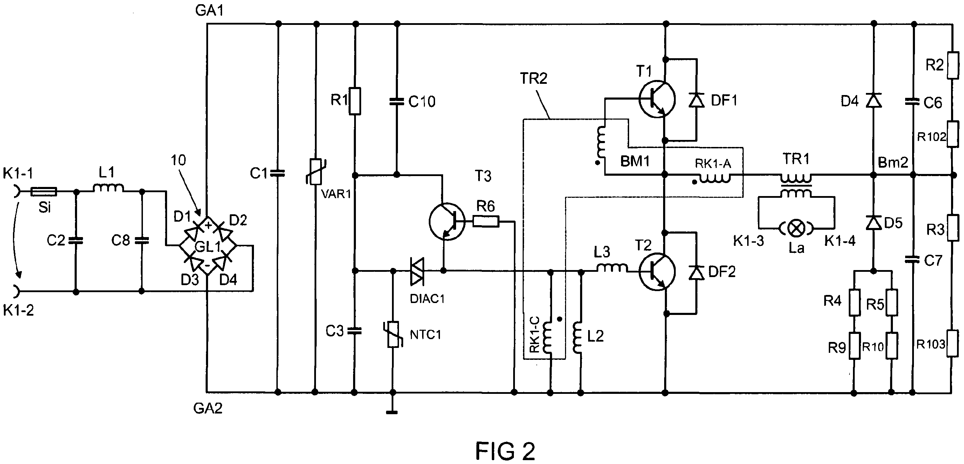

Die mit Bezug auf Fig. 1 eingeführten Bezugszeichen werden für gleiche und entsprechende Bauteile der in Fig. 2 dargestellten Ausführungsform einer erfindungsgemäßen Schaltungsanordnung weiterverwendet und nicht nochmals eingeführt. Vielmehr wird nur auf die Unterschiede zu der in Fig. 1 dargestellten, bekannten Schaltungsanordnung eingegangen.

Bei der in Fig. 2 dargestellten Ausführungsform ist die Steuerelektrode des Transistors T3 mit dem Bezugspotential gekoppelt, während die Bezugselektrode des Transistors T3 mit der dritten Wicklung RK1-C des Transformators TR2 gekoppelt ist. Die Steuerelektrode des Transistors T2 ist jedoch weiterhin mit der dritten Wicklung RK1-C des Transformators TR2 gekoppelt, während die Bezugselektrode des Transistors T2 weiterhin mit dem Bezugspotential gekoppelt ist. Dadurch ergibt sich eine gegenüber Fig. 1 um 180° phasenverschobene Ansteuerung des Transistors T3 mit Bezug auf die Ansteuerung des Transistors T2. Dadurch wird zu den Zeitpunkten, zu denen der Transistor T1 leitet, d. h. der Transistor T2 sperrt, der Transistor T3 leitend geschaltet, so dass der Kondensator C3 und ein eventuell vorhandener Surgepuls kurzgeschlossen werden. Damit kann zu diesen Zeitpunkten der Transistor T2 nicht mehr leitfähig werden. Ein Querstrom wird zuverlässig vermieden, die Schaltungsanordnung sicher vor Surgepulsen geschützt.

Wie für den Fachmann offensichtlich, könnte die Funktion des Transistors T3 ohne weiteres durch eine Schaltung mit anderen oder weiteren Transistoren realisiert werden, so dass der Begriff "Transistor T3" funktionell zu sehen ist und weniger den tatsächlichen Aufbau betrifft, wobei jedoch die Realisierung durch einen einzigen Transistor, so wie in der Fig. 2 dargestellt, bevorzugt ist.

## Patentansprüche

1. Schaltungsanordnung zum Betreiben mindestens einer Beleuchtungseinrichtung (La) mit
- einem Eingang, der einen ersten (K1-1) und einen zweiten Eingangsanschluss (K1-2) aufweist, zum Anschließen einer Versorgungsspannung (U_{N});
- einem Ausgang, der einen ersten (K1-3) und einen zweiten Ausgangsanschluss (K1-4) aufweist, zum Anschließen der mindestens einen Beleuchtungseinrichtung (La);
- einem Gleichrichter (10), der eingangsseitig mit dem ersten (K1-1) und dem zweiten Eingangsanschluss (K1-2) gekoppelt ist, wobei der Gleichrichter (10) einen Ausgang mit einem ersten (GA1) und einem zweiten Ausgangsanschluss (GA2) aufweist;
- einer Brückenschaltung mit einem ersten (BM1) und einem zweiten Brückenmittelpunkt (BM2), wobei die Brückenschaltung mindestens einen ersten (T1) und einen zweiten elektronischen Schalter (T2) umfasst, wobei jeder elektronische Schalter (T1; T2) eine Steuerelektrode, eine Bezugselektrode und eine Arbeitselektrode aufweist, wobei die Bezugselektrode des ersten elektronischen Schalters (T1) unter Ausbildung des ersten Brückenmittelpunkts (BM1) mit der Arbeitselektrode des zweiten elektronischen Schalters (T2) gekoppelt ist;
- einem ersten Transformator (TR1) mit einer ersten und einer zweiten Wicklung, wobei die erste Wicklung zwischen den ersten (BM1) und den zweiten Brückenmittelpunkt (BM2) gekoppelt ist, wobei ein erster Anschluss der zweiten Wicklung mit dem ersten Ausgangsanschluss (K1-3) und ein zweiter Anschluss der zweiten Wicklung mit dem zweiten Ausgangsanschluss (K1-4) der Schaltungsanordnung gekoppelt ist;
- einem zweiten Transformator (TR2) mit einer ersten (RK1-A), einer zweiten (RK1-B) und einer dritten Wicklung (RK1-C), wobei die erste Wicklung (RK1-A) seriell zur ersten Wicklung des ersten Transformators (TR1) gekoppelt ist, wobei die zweite Wicklung (RK1-B) zwischen die Steuerelektrode und die Bezugselektrode des ersten elektronischen Schalters (T1) und die dritte Wicklung (RK1-C) zwischen die Steuerelektrode und die Bezugselektrode des zweiten elektronischen Schalters (T2) gekoppelt ist;
- einem ersten Kondensator (C3), dessen erster Anschluss mit dem ersten Ausgangsanschluss (GA1) des Gleichrichters (10) und dessen zweiter Anschluss mit dem zweiten Ausgangsanschluss (GA2) des Gleichrichters (10) gekoppelt ist;
- einer Zündvorrichtung (DIAC1), deren erster Anschluss mit dem ersten Anschluss des ersten Kondensators (C3) und deren zweiter Anschluss mit der Steuerelektrode des zweiten elektronischen Schalters (T3) gekoppelt ist; und
- einem dritten elektronischen Schalter (T3), der eine Steuerelektrode, eine Bezugselektrode und eine Arbeitselektrode aufweist, wobei die Arbeitselektrode des dritten elektronischen Schalters (T3) mit dem ersten Ausgangsanschluss (GA1) des Gleichrichters (10) gekoppelt ist;
**dadurch gekennzeichnet,**
**dass** die Bezugselektrode des dritten elektronischen Schalters (T3) mit der Steuerelektrode des zweiten elektronischen Schalters (T2) gekoppelt ist; und
**dass** die Steuerelektrode des dritten elektronischen Schalters (T3) mit der Bezugselektrode des zweiten elektronischen Schalters (T2) gekoppelt ist.

2. Schaltungsanordnung nach Anspruch 1,
**dadurch gekennzeichnet,**
**dass** die Schaltungsanordnung weiterhin eine Parallelschaltung eines ersten ohmschen Widerstands (R1) und eines zweiten Kondensators (C10) umfasst, die zwischen den ersten Ausgangsanschluss (GA1) des Gleichrichters (10) und den ersten Anschluss des ersten Kondensators gekoppelt ist.

3. Schaltungsanordnung nach einem der Ansprüche 1 oder 2,
**dadurch gekennzeichnet,**
**dass** der erste (T1) und/oder der zweite (T2) und/oder der dritte elektronische Schalter (T3) als Bipolartransistor ausgeführt ist/sind, wobei dem den ersten elektronischen Schalter (T1) realisierenden Bipolartransistor und/oder dem den zweiten elektronischen Schalter (T2) realisierenden Bipolartransistor eine Freilaufdiode (D_{F1}; D_{F2}) parallel geschaltet ist.

4. Schaltungsanordnung nach einem der vorhergehenden Ansprüche,
**dadurch gekennzeichnet,**
**dass** zwischen den ersten (GA1) und den zweiten Ausgangsanschluss (GA2) des Gleichrichters (10) ein dritter Kondensator (C1) und/oder ein Varistor (VAR1) gekoppelt ist/sind.

5. Schaltungsanordnung nach einem der vorhergehenden Ansprüche,
**dadurch gekennzeichnet,**
**dass** zwischen den Kopplungspunkt der dritten Wicklung (RK1-C) des zweiten Transformators (TR2) und der Steuerelektrode des zweiten elektronischen Schalters (T2) einerseits und der Steuerelektrode des dritten elektronischen Schalters (T3) andererseits ein zweiter ohmscher Widerstand (R6) gekoppelt ist.

6. Schaltungsanordnung nach einem der vorhergehenden Ansprüche,
**dadurch gekennzeichnet,**
**dass** dem ersten Kondensator (C3) ein NTC-Widerstand parallel geschaltet ist.

7. Schaltungsanordnung nach einem der vorhergehenden Ansprüche,
**dadurch gekennzeichnet,**
**dass** die Schaltungsanordnung weiterhin eine erste (D4) und eine zweite Koppeldiode (D5) umfasst, wobei die erste Koppeldiode (D4) zwischen den ersten Ausgangsanschluss (GA1) des Gleichrichters (10) und dem zweiten Brückenmittelpunkt (BM2) gekoppelt ist, und wobei die zweite Koppeldiode (D5) zwischen den zweiten Brückenmittelpunkt (BM2) und den zweiten Ausgangsanschluss (GA2) des Gleichrichters (10) gekoppelt ist.

8. Schaltungsanordnung nach Anspruch 7 in Rückbezug auf Anspruch 6,
**dadurch gekennzeichnet,**
**dass** zwischen die zweite Koppeldiode (D5) und den zweiten Ausgangsanschluss (GA2) des Gleichrichters (10) ein Widerstandsnetzwerk (R4, R5, R9, R10) gekoppelt ist, wobei der NTC-Widerstand (NTC1) derart räumlich zum Widerstandsnetzwerk (R4, R5, R9, R10) angeordnet ist, dass er thermisch mit dem Widerstandsnetzwerk (R4, R5, R9, R10) gekoppelt ist.

9. Verfahren zum Betreiben mindestens einer Beleuchtungseinrichtung (La) an einer Schaltungsanordnung mit einem Eingang, der einen ersten (K1-1) und einen zweiten Eingangsanschluss (K1-2) aufweist, zum Anschließen einer Versorgungsspannung (U_{N}); einem Ausgang, der einen ersten (K1-3) und einen zweiten Ausgangsanschluss (K1-4) aufweist, zum Anschließen der mindestens einen Beleuchtungseinrichtung (La); einem Gleichrichter (10), der eingangsseitig mit dem ersten (K1-1) und dem zweiten Eingangsanschluss (K1-2) gekoppelt ist, wobei der Gleichrichter (10) einen Ausgang mit einem ersten (GA1) und einem zweiten Ausgangsanschluss (GA2) aufweist; eine Brückenschaltung mit einem ersten (BM1) und einem zweiten Brückenmittelpunkt (BM2), wobei die Brückenschaltung mindestens einen ersten (T1) und einen zweiten elektronischen Schalter (T2), wobei jeder elektronische Schalter (T1; T2) eine Steuerelektrode, eine Bezugselektrode und eine Arbeitselektrode aufweist, wobei die Bezugselektrode des ersten elektronischen Schalters (T1) unter Ausbildung des ersten Brückenmittelpunkts (BM1) mit der Arbeitselektrode des
zweiten elektronischen Schalters (T2) gekoppelt ist; einem ersten Transformator (TR1) mit einer ersten und einer zweiten Wicklung, wobei die erste Wicklung zwischen den ersten (BM1) und den zweiten Brückenmittelpunkt (BM2) gekoppelt ist, wobei ein erster Anschluss der zweiten Wicklung mit dem ersten Ausgangsanschluss (K1-3) und ein zweiter Anschluss der zweiten Wicklung mit dem zweiten Ausgangsanschluss (K1-4) der Schaltungsanordnung gekoppelt ist; einem zweiten Transformator (TR2) mit einer ersten (RK1-A), einer zweiten (RK1-B) und einer dritten Wicklung (RK1-C), wobei die erste Wicklung (RK1-A) seriell zur ersten Wicklung des ersten Transformators (TR1) gekoppelt ist, wobei die zweite Wicklung (RK1-B) zwischen die Steuerelektrode und die Bezugselektrode des ersten elektronischen Schalters (T1) und die dritte Wicklung (RK1-C) zwischen die Steuerelektrode und die Bezugselektrode des zweiten elektronischen Schalters (T2) gekoppelt ist; einem ersten Kondensator (C3), dessen erster Anschluss mit dem ersten Ausgangsanschluss (GA1) des Gleichrichters (10) und dessen zweiter Anschluss mit dem zweiten Ausgangsanschluss (GA2) des Gleichrichters (10) gekoppelt ist; einer Zündvorrichtung (DIAC1), deren erster Anschluss mit dem ersten Anschluss des ersten Kondensators (C3) und deren zweiter Anschluss mit der Steuerelektrode des zweiten elektronischen Schalters (T2) gekoppelt ist; und einem dritten elektronischen Schalter (T3), der eine Steuerelektrode, eine Bezugselektrode und eine Arbeitselektrode aufweist, wobei die Arbeitselektrode des dritten elektronischen Schalters (T3) mit dem ersten Ausgangsanschluss (GA1) des Gleichrichters (10) gekoppelt ist;
**gekennzeichnet durch** folgenden Schritt:
Betreiben des zweiten elektronischen Schalters (T2) und des dritten elektronischen Schalters (T3) im Gegentakt.

## Claims

1. Circuit arrangement for operating at least one lighting device (La) with
- an input, which has a first input terminal (K1-1) and a second input terminal (K1-2), for connection to a supply voltage (U_{N});
- an output, which has a first output terminal (K1-3) and a second output terminal (K1-4), for connection to the at least one lighting device (La);
- a rectifier (10), which is coupled on the input side to the first input terminal (K1-1) and the second input terminal (K1-2), the rectifier (10) having an output with a first output terminal (GA1) and a second output terminal (GA2);
- a bridge circuit with a first bridge centre point (BM1) and a second bridge centre point (BM2), the bridge circuit comprising at least a first electronic switch (T1) and a second electronic switch (T2), each electronic switch (T1; T2) having a control electrode, a reference electrode and a working electrode, the reference electrode of the first electronic switch (T1) being coupled to the working electrode of the second electronic switch (T2) so as to form the first bridge centre point (BM1);
- a first transformer (TR1) with a first winding and a second winding, the first winding being coupled between the first bridge centre point (BM1) and the second bridge centre point (BM2), a first terminal of the second winding being coupled to the first output terminal (K1-3), and a second terminal of the second winding being coupled to the second output terminal (K1-4) of the circuit arrangement;
- a second transformer (TR2) with a first winding (RK1-A), a second winding (RK1-B) and a third winding (RK1-C), the first winding (RK1-A) being coupled in series with the first winding of the first transformer (TR1), the second winding (RK1-B) being coupled between the control electrode and the reference electrode of the first electronic switch (T1), and the third winding (RK1-C) being coupled between the control electrode and the reference electrode of the second electronic switch (T2);
- a first capacitor (C3), whose first terminal is coupled to the first output terminal (GA1) of the rectifier (10) and whose second terminal is coupled to the second output terminal (GA2) of the rectifier (10);
- a starting apparatus (DIAC1), whose first terminal is coupled to the first terminal of the first capacitor (C3) and whose second terminal is coupled to the control electrode of the second electronic switch (T3); and
- a third electronic switch (T3), which has a control electrode, a reference electrode and a working electrode, the working electrode of the third electronic switch (T3) being coupled to the first output terminal (GA1) of the rectifier (10);
**characterized**
**in that** the reference electrode of the third electronic switch (T3) is coupled to the control electrode of the second electronic switch (T2); and
**in that** the control electrode of the third electronic switch (T3) is coupled to the reference electrode of the second electronic switch (T2).

2. Circuit arrangement according to Claim 1,
**characterized**
**in that** the circuit arrangement furthermore comprises a parallel circuit comprising a first nonreactive resistor (R1) and a second capacitor (C10), which is coupled between the first output terminal (GA1) of the rectifier (10) and the first terminal of the first capacitor.

3. Circuit arrangement according to either of Claims 1 and 2,
**characterized**
**in that** the first electronic switch (T1) and/or the second electronic switch (T2) and/or the third electronic switch (T3) is/are in the form of (a) bipolar transistor(s), a freewheeling diode (D_{F1}; D_{F2}) being connected in parallel with the bipolar transistor realizing the first electronic switch (T1) and/or the bipolar transistor realizing the second electronic switch (T2).

4. Circuit arrangement according to one of the preceding claims,
**characterized**
**in that** a third capacitor (C1) and/or a varistor (VAR1) is/are coupled between the first output terminal (GA1) and the second output terminal (GA2) of the rectifier (10).

5. Circuit arrangement according to one of the preceding claims,
**characterized**
**in that** a second nonreactive resistor (R6) is coupled between the coupling point between the third winding (RK1-C) of the second transformer (TR2) and the control electrode of the second electronic switch (T2), on the one side, and the control electrode of the third electronic switch (T3), on the other side.

6. Circuit arrangement according to one of the preceding claims,
**characterized**
**in that** an NTC thermistor is connected in parallel with the first capacitor (C3).

7. Circuit arrangement according to one of the preceding claims,
**characterized**
**in that** the circuit arrangement further comprises a first coupling diode (D4) and a second coupling diode (D5), the first coupling diode (D4) being coupled between the first output terminal (GA1) of the rectifier (10) and the second bridge centre point (BM2), and the second coupling diode (D5) being coupled between the second bridge centre point (BM2) and the second output terminal (GA2) of the rectifier (10).

8. Circuit arrangement according to Claim 7 with back-reference to Claim 6,
**characterized**
**in that** a resistor network (R4, R5, R9, R10) is coupled between the second coupling diode (D5) and the second output terminal (GA2) of the rectifier (10), the NTC thermistor (NTC1) being arranged spatially with respect to the resistor network (R4, R5, R9, R10) in such a way that it is thermally coupled to the resistor network (R4, R5, R9, R10).

9. Method for operating at least one lighting device (La) using a circuit arrangement having an input which has a first input terminal (K1-1) and a second input terminal (K1-2), for connection to a supply voltage (U_{N}); an output, which has a first output terminal (K1-3) and a second output terminal (K1-4), for connection to the at least one lighting device (La); a rectifier (10), which is coupled on the input side to the first input terminal (K1-1) and the second input terminal (K1-2), the rectifier (10) having an output with a first output terminal (GA1) and a second output terminal (GA2); a bridge circuit with a first bridge centre point (BM1) and a second bridge centre point (BM2), the bridge circuit having at least a first electronic switch (T1) and a second electronic switch (T2), each electronic switch (T1; T2) having a control electrode, a reference electrode and a working electrode, the reference electrode of the first electronic switch (T1) being coupled to the working electrode of the second electronic switch (T2) so as to form the first bridge centre point (BM1); a first transformer (TR1) with a first winding and a second winding, the first winding being coupled between the first bridge centre point (BM1) and the second bridge centre point (BM2), a first terminal of the second winding being coupled to the first output terminal (K1-3) and a second terminal of the second winding being coupled to the second output terminal (K1-4) of the circuit arrangement; a second transformer (TR2) with a first winding (RK1-A), a second winding (RK1-B) and a third winding (RK1-C), the first winding (RK1-A) being coupled in series with the first winding of the first transformer (TR1), the second winding (RK1-B) being coupled between the control electrode and the reference electrode of the first electronic switch (T1), and the third winding (RK1-C) being coupled between the control electrode and the reference electrode of the second electronic switch (T2); a first capacitor (C3), whose first terminal is coupled to the first output terminal (GA1) of the rectifier (10) and whose second terminal is coupled to the second output terminal (GA2) of the rectifier (10); a starting apparatus (DIAC1), whose first terminal is coupled to the first terminal of the first capacitor (C3) and whose second terminal is coupled to the control electrode of the second electronic switch (T2); and a third electronic switch (T3), which has a control electrode, a reference electrode and a working electrode, the working electrode of the third electronic switch (T3) being coupled to the first output terminal (GA1) of the rectifier (10);
**characterized by** the following step:
push-pull operation of the second electronic switch (T2) and the third electronic switch (T3).

## Revendications

1. Circuit pour faire fonctionner au moins un dispositif d'éclairage (La), comprenant
- une entrée qui comprend une première (K1-1) et une seconde borne d'entrée (K1-2) pour le raccordement à une tension d'alimentation (UN) ;
- une sortie qui comprend une première (K1-3) et une seconde borne de sortie (K1-4) pour la connexion de l'au moins un dispositif d'éclairage (La) ;
un redresseur (10) qui est relié, côté entrée, à la première (K1-1) et à la seconde borne d'entrée (K1-2), le redresseur (10) étant pourvu d'une sortie comprenant une première (GA1) et une seconde borne de sortie (GA2) ;
- un montage en pont comprenant un premier (BM1) et un second point médian de pont (BM2), le montage en pont comprenant au moins un premier (T1) et un deuxième interrupteur électronique (T2), chaque interrupteur électronique (T1; T2) comprenant une électrode de commande, une électrode de référence et une électrode de travail, l'électrode de référence du premier interrupteur électronique (T1) étant reliée à l'électrode de travail du deuxième interrupteur électronique (T2), en formant ainsi le premier point médian de pont (BM1) ;
- un premier transformateur (TR1) pourvu d'un premier et d'un second enroulements, le premier enroulement étant branché entre le premier (BM1) et le second point médian de pont (BM2), une première borne du second enroulement étant reliée à la première borne de sortie (K1-3) et une seconde borne du second enroulement étant reliée à la seconde borne de sortie (K1-4) du circuit ;
- un second transformateur (TR2) pourvu d'un premier (RK1-A), d'un deuxième (RK1-B) et d'un troisième enroulement (RK1-C), le premier enroulement (RK1-A) étant monté en série avec le premier enroulement du premier transformateur (TR1), le deuxième enroulement (RK1-B) étant branché entre l'électrode de commande et l'électrode de référence du premier interrupteur électronique (T1) et le troisième enroulement (RK1-C) étant branché entre l'électrode de commande et l'électrode de référence du deuxième interrupteur électronique (T2) ;
- un premier condensateur (C3) dont la première borne est reliée à la première borne de sortie (GA1) du redresseur (10) et dont la seconde borne est reliée à la seconde borne de sortie (GA2) du redresseur (10) ;
- un dispositif d'amorçage (DIAC1) dont la première borne est reliée à la première borne du premier condensateur (C3) et dont la seconde borne est reliée à l'électrode de commande du deuxième interrupteur électronique (T3) ; et
- un troisième interrupteur électronique (T3) qui comprend une électrode de commande, une électrode de référence et une électrode de travail, l'électrode de travail du troisième interrupteur électronique (T3) étant reliée à la première borne de sortie (GA1) du redresseur (10) ; **caractérisé**
**en ce que** l'électrode de référence du troisième interrupteur électronique (T3) est reliée à l'électrode de commande du deuxième interrupteur électronique (T2) ; et en ce que l'électrode de commande du troisième interrupteur électronique (T3) est reliée à l'électrode de référence du deuxième interrupteur électronique (T2).

2. Circuit selon la revendication 1, **caractérisé en ce que** le circuit comprend, en outre, un montage en parallèle d'une première résistance ohmique (R1) et d'un deuxième condensateur (C10) qui est branché entre la première borne de sortie (GA1) du redresseur (10) et la première borne du premier condensateur.

3. Circuit selon l'une des revendications 1 ou 2, **caractérisé en ce que** le premier (T1) et/ou le deuxième (T2) et/ou le troisième interrupteur électronique (T3) est /sont exécuté/s en tant que transistor/s bipolaire/s, une diode de roue libre (D_{F1}; D_{F2}) étant montée en parallèle avec le transistor bipolaire formant le premier interrupteur électronique (T1) et/ou avec le transistor bipolaire formant le deuxième interrupteur électronique (T2).

4. Circuit selon l'une des revendications précédentes, **caractérisé**
**en ce qu'**un troisième condensateur (C1) et/ou une varistance (VAR1) est/sont branché/s entre la première (GA1) et la seconde borne de sortie (GA2) du redresseur (10).

5. Circuit selon l'une des revendications précédentes, **caractérisé**
**en ce qu'**une seconde résistance ohmique (R6) est branchée entre le point de jonction du troisième enroulement (RK1-C) du second transformateur (TR2) et de l'électrode de commande du deuxième interrupteur électronique (T2), d'une part, et l'électrode de commande du troisième interrupteur électronique (T3), d'autre part.

6. Circuit selon l'une des revendications précédentes, **caractérisé**
**en ce qu'**une résistance CTN est branchée en parallèle avec le premier condensateur (C3).

7. Circuit selon l'une des revendications précédentes, **caractérisé**
**en ce que** le circuit comprend, en outre, une première (D4) et une seconde diode de couplage (D5), la première diode de couplage (D4) étant branchée entre la première borne de sortie (GA1) du redresseur (10) et le second point médian de pont (BM2) et la seconde diode de couplage (D5) étant branchée entre le second point médian de pont (BM2) et la seconde borne de sortie (GA2) du redresseur (10).

8. Circuit selon la revendication 7 en référence à la revendication 6,
**caractérisé**
**en ce qu'**un réseau de résistances (R4, R5, R9, R10) est branché entre la seconde diode de couplage (D5) et la seconde borne de sortie (GA2) du redresseur (10), la résistance CTN (NTC1) étant située de telle sorte dans l'espace par rapport au réseau de résistances (R4, R5, R9, R10) qu'elle est couplée thermiquement au réseau de résistances (R4, R5, R9, R10).

9. Procédé pour faire fonctionner au moins un dispositif d'éclairage (La) relié à un circuit (La) comprenant une entrée qui comprend une première (K1-1) et une seconde borne d'entrée (K1-2) pour le raccordement à une tension d'alimentation (U_{N}); une sortie qui comprend une première (K1-3) et une seconde borne de sortie (K1-4) pour la connexion de l'au moins un dispositif d'éclairage (La) ; un redresseur (10) qui est relié, côté entrée, à la première (K1-1) et à la seconde borne d'entrée (K1-2), le redresseur (10) étant pourvu d'une sortie comprenant une première (GA1) et une seconde borne de sortie (GA2) ; un montage en pont comprenant un premier (BM1) et un second point médian de pont (BM2), le montage en pont comprenant au moins un premier (T1) et un deuxième interrupteur électronique (T2), chaque interrupteur électronique (T1; T2) comprenant une électrode de commande, une électrode de référence et une électrode de travail, l'électrode de référence du premier interrupteur électronique (T1) étant reliée à l'électrode de travail du deuxième interrupteur électronique (T2), en formant ainsi le premier point médian de pont (BM1) ; un premier transformateur (TR1) pourvu d'un premier et d'un second enroulements, le premier enroulement étant branché entre le premier (BM1) et le second point médian de pont (BM2), une première borne du second enroulement étant reliée à la première borne de sortie (K1-3) et une seconde borne du second enroulement étant reliée à la seconde borne de sortie (K1-4) du circuit ; un second transformateur (TR2) pourvu d'un premier (RK1-A), d'un deuxième (RK1-B) et d'un troisième enroulement (RK1-C), le premier enroulement (RK1-A) étant monté en série avec le premier enroulement du premier transformateur (TR1), le deuxième enroulement (RK1-B) étant branché entre l'électrode de commande et l'électrode de référence du premier interrupteur électronique (T1) et le troisième enroulement (RK1-C) étant branché entre l'électrode de commande et l'électrode de référence du deuxième interrupteur électronique (T2) ; un premier condensateur (C3) dont la première borne est reliée à la première borne de sortie (GA1) du redresseur (10) et dont la seconde borne est reliée à la seconde borne de sortie (GA2) du redresseur (10) ; un dispositif d'amorçage (DIAC1) dont la première borne est reliée à la première borne du premier condensateur (C3) et dont la seconde borne est reliée à l'électrode de commande du deuxième interrupteur électronique (T2) ; et un troisième interrupteur électronique (T3) qui comprend une électrode de commande, une électrode de référence et une électrode de travail, l'électrode de travail du troisième interrupteur électronique (T3) étant reliée à la première borne de sortie (GA1) du redresseur (10) ; **caractérisé par** l'étape suivante : fonctionnement symétrique du deuxième interrupteur électronique (T2) et du troisième interrupteur électronique (T3).
